# EUROPEAN PATENT APPLICATION

(11) **EP 2 894 328 A1**
(43) Date of publication of application: **15.07.2015**
(21) Application number: 15150543.5
(22) Date of filing: 08.01.2015
(51) Int. Cl.: F03B 17/02, F03G 3/00

(54) **RIGID BODY DYNAMICS-BASED HYDROPOWER TECHNOLOGY**

(30) Priority: 11.01.2014 GB 201400450; 11.08.2014 GB 201414154
(71) Applicant: Sharif, Issam, 1020 Wien (AT)
(72) Inventor: Sharif, Issam, 1020 Wien (AT)

(57) **Abstract**

This invention relates to a rigid body dynamics-based hydropower technology, which is capable of generating useful mechanical or electrical energy from gravitational potential energy of renewable water resources in a two phases production cycle involving the following production steps: a) containing the required amount of water for performing a production cycle at the level of the upstream water table or of water intake; b) transferring the contained gravitational potential energy of contained water to a rigid body in the form of a sphere (6); c) converting the gained gravitational potential energy of the rigid sphere into kinetic energy; d) converting the stored kinetic energy in the rigid sphere into useful mechanical or electrical energy. The first phase of production involves the stages (a-c) and could be carried out by means of the vertical rigid energy generating engine (1000), whereas the second involves the stage (d) and could be carried out by means of the rigid energy conversion mechanism (500).

## Description

This invention relates to a rigid body dynamics-based hydropower technology, which is capable of generating useful mechanical or electrical energy from the gravitational potential energy of renewable water resources.

The conventional hydropower technologies which are known from the state of the art are based on the laws of fluid mechanics. They use devices which enable extracting power from the stored kinetic energy or gravitational potential energy in water.

As is known water turbines are the most significant conventional hydr17.1opower devices. These devices have two main deficiencies, the first is the dependency of their mechanical efficiency and economic feasibility on the heights of hydraulic heads and the second is the ecological and economic damages resulting from constructing the required high dams and creating the related reservoirs for securing high hydraulic heads.

There are a number of types of conventional inefficient low-head turbines. The only low-head turbine with high efficiency is the Kaplan turbine. As the payback period of a Kaplan designed for low-head installations can be expected to be up to 25-30 years, then its application cannot be considered economically feasible.

Three types of modern low-head wheels which employ potential energy of water are known from the state of the art. These are overshot, undershot and Breast wheels. The use of these wheels for electricity generation is not economically feasible because of their high fixed costs per unit resulting from the design complexity and their slow movement which does not permit the water wheel to be mounted directly into the generator. The designers overcome the problem of slow movement of the wheel by means of employing gear boxes with transmission ratios of approximately 1:100. Such gear boxes could constitute up to 45% of the cost of the water wheel installation. The payback period of these wheels is relatively high, for instance, for an undershot wheel installation it can be expected to be 14 years.

In contrast to these wheels the Pelton wheel is mechanically efficient and economically feasible, when the renewable water source has relatively high hydraulic head. It is ideal for the production of power from low volume water flows at a high head with reasonable efficiency.

The following rule can be drawn on the use of devices functioning in accordance with the laws of fluid mechanics: "More power can be extracted from a water source with high-pressure and low-flow than from a source with low-pressure and high-flow, even when the two flows theoretically contain the same power."

The dependency of the efficiency and economic feasibility of conventional hydropower technologies on high heads is the cause for neglecting renewable water resources having low heads even in cases where they have relatively high volumetric flow rate. The existence of a huge number of untapped water resources around the world with relatively low gradients, such as small and large rivers, streams and irrigation canals are a stunning testament to the shortcomings of traditional hydropower technologies.

At present the total output of hydropower stations accounts only about 16 percent of the global electricity generation. "World Watch Institute (January 2012)". This low share is the result of neglecting low head resources and growing awareness of the ecological and economic damages resulting from constructing high dams and creating relevant reservoirs.

There is, therefore, an urgent need for a new type of environmentally friendly hydropower technology that enables generating electricity with high efficiency and low per unit cost of production from low-head renewable water resources. This kind of technology is what the present invention aims to create.

The invention solves the set task by basing the process of energy generation on the laws of rigid body dynamics instead of the laws of fluid mechanics according to the following production stages:
1) Containing the required amount of water for performing a production cycle from the used renewable water resource at the level of the upstream water table or of water intake, 2) Transferring the gravitational potential energy of the contained water to a rigid sphere, 3) Converting the gained gravitational potential energy by the rigid sphere into kinetic energy, 4) Converting the stored kinetic energy in the rigid sphere into useful mechanical or electrical energy.

According to the invention the production cycle of a rigid body dynamics-based hydropower plant consists of two phases. The first phase involves the production stages 1-3 and carried out by means of a rigid energy generating engine. The second phase of production involves the production stage 4 and carried out by means of a **rigid energy conversion mechanism.**

Rigid body dynamics-based hydropower technology is a completely new concept from the standpoint of applied physics. It is obvious that by transferring the gravitational potential energy contained in water to a rigid sphere we avoid using complicated and expensive means of production which are based on fluid mechanics and which are dependent for their efficiency on high heads. Ones the gravitational potential energy contained in water is transferred to a rigid sphere, then simple means of production which are based on rigid body dynamics can be applied with high efficiency regardless the height of the hydraulic head.

As a highly efficient low-head and low-cost hydropower technology the rigid body dynamics-based hydropower technology is most suitable for harnessing tidal energy. Therefore, the total renewable water resources that could be economically exploited with the help of this technology are enormous. The application of this technology would definitely play a decisive role in increasing the share of global electricity production from renewable resources and strongly reduce pollutants which contribute to both air pollution and global climate change.

The invention will now be described solely by way of example and with reference to the accompanying drawings in which:
Figure 1 shows a schematic side view of an integrated hydropower plant using rigid body dynamics-based hydropower technology with a vertical rigid energy generating engine and a rigid energy conversion mechanism according to the invention,
Figure 2 shows a schematic side and front views of the chamber and float of a vertical rigid energy generating engine,
Figure 3 shows a schematic side and top views of a rigid energy conversion mechanism,
Figure 4 shows a schematic top view of an integrated plant with a vertical rigid energy generating engine and a rigid energy conversion mechanism,
Figure 5 shows a schematic back view of a side-alternating rigid energy generating engine based on Archimedes' upthrust principle,
Figure 6 shows a schematic back view of a side-alternating rigid energy generating engine based on Archimedes' upthrust principle, where the floats and the mechanism for regulating water intake and outflow are revealed,

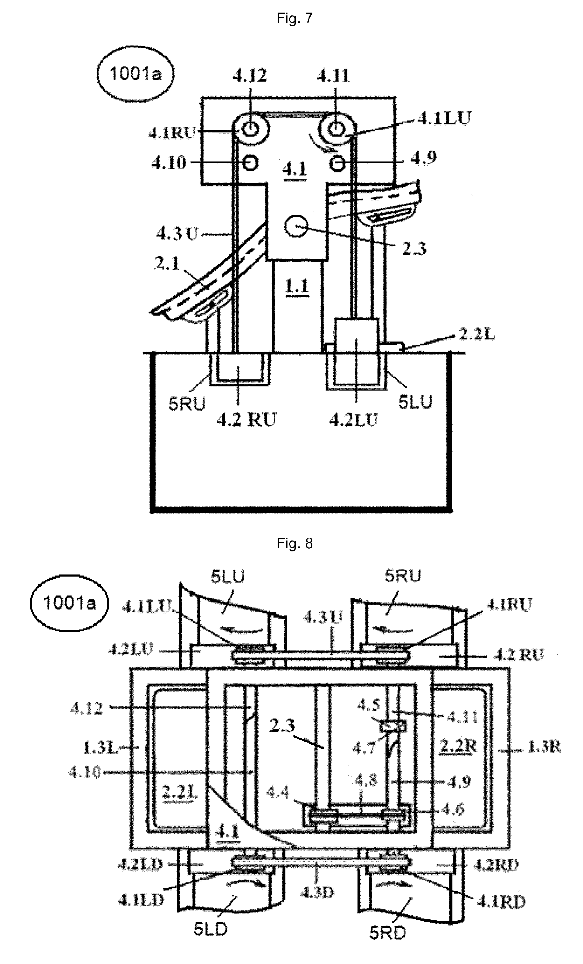

Figure 7 shows a schematic front view of a side-alternating rigid energy generating engine based on Archimedes' upthrust principle,
Figure 8 shows a schematic top view of a side-alternating rigid energy generating engine based on Archimedes' upthrust principle,
Figure 9 shows a schematic front view of a side-alternating rigid energy generating engine with water containers,
Figure 10 shows a schematic side view of a mechanism for regulating water intake for a side-alternating rigid energy generating engine with water containers,
Figure 11 shows a schematic top view of a side-alternating rigid energy generating engine with water containers,
Figure 12 shows a schematic side view of the structure of a side-alternating rigid energy generating engine with water containers,
Figure 13 shows a schematic side view of the left side rigid energy conversion mechanism which is connected to a side-alternating rigid energy generating engine,
Figure 14 shows a schematic top view of the left side rigid energy conversion mechanism which is connected to a side-alternating rigid energy generating engine,
Figure 15 shows a schematic side view of the right side rigid energy conversion mechanism which is connected to a side-alternating rigid energy generating engine,
Figure 16 shows a schematic side view of the left side rigid energy conversion mechanism required for operating water pump,
Figure 17 shows a top view of an integrated water pumping plant consisting of a side-alternating rigid energy generating engine and two rigid energy conversion mechanisms capable of operating a water pump,
Figure 18 shows alternative combinations of side-alternating rigid energy generating engines with rigid energy conversion mechanisms,
Figure 19 shows a schematic front view of a revolving rigid energy generating engine with water containers,
Figure 20 shows a schematic front view of the drum used in the revolving rigid energy generating engine with water containers,
Figure 21 shows a cross-section of the drum used in the revolving rigid energy generating engine with water containers,
Figure 22 shows how the rigid spheres could be grabbed by means of the two crossed levers,
Figure 23 shows the working principle of a revolving rigid energy generating engine with water containers,
Figure 24 shows a schematic top view of an integrated plant with a revolving rigid energy generating engine with water containers and a rigid energy conversion mechanism according to the invention,
Figure 25 shows a schematic top view of an integrated plant with a revolving rigid energy generating engine with water containers and two rigid energy conversion mechanisms,
Figure 26 shows a schematic top view of an integrated hydropower plant using rigid body dynamics-based hydropower technology comprising a revolving rigid energy generating engine operating on the basis of Archimedes' upthrust principle and a rigid energy conversion mechanism,
Figure 27 shows a schematic side view of a revolving rigid energy generating engine operating on the basis of Archimedes' upthrust principle,
Figure 28 shows the working principle of a revolving rigid energy generating engine operating on the basis of Archimedes' upthrust principle,
Figure 29 shows different variants of water intake and water outflow which are appropriate for connecting an energy generating engine using rigid body dynamics-based hydropower technology to the reneuable water resources.

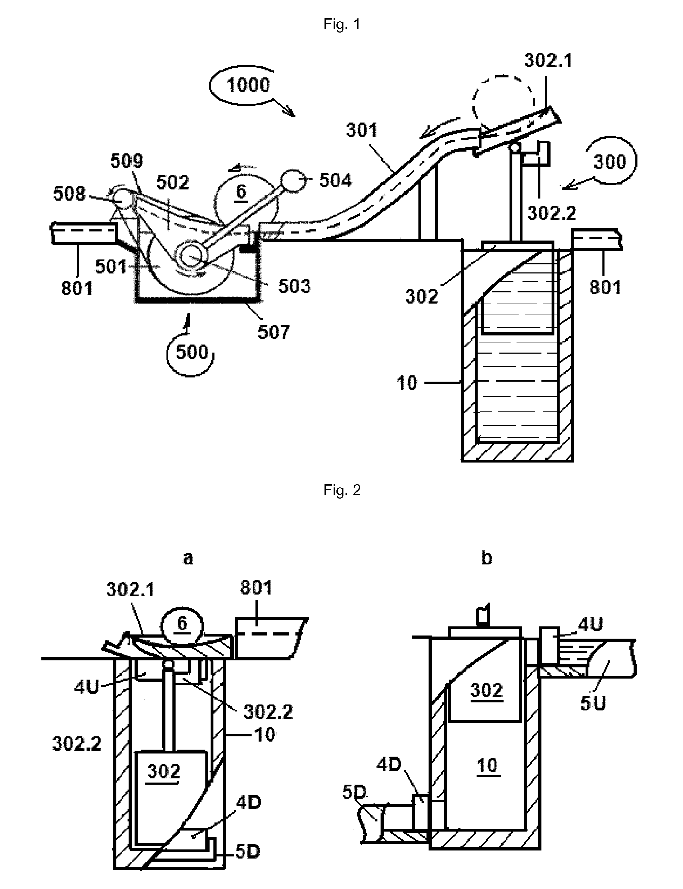

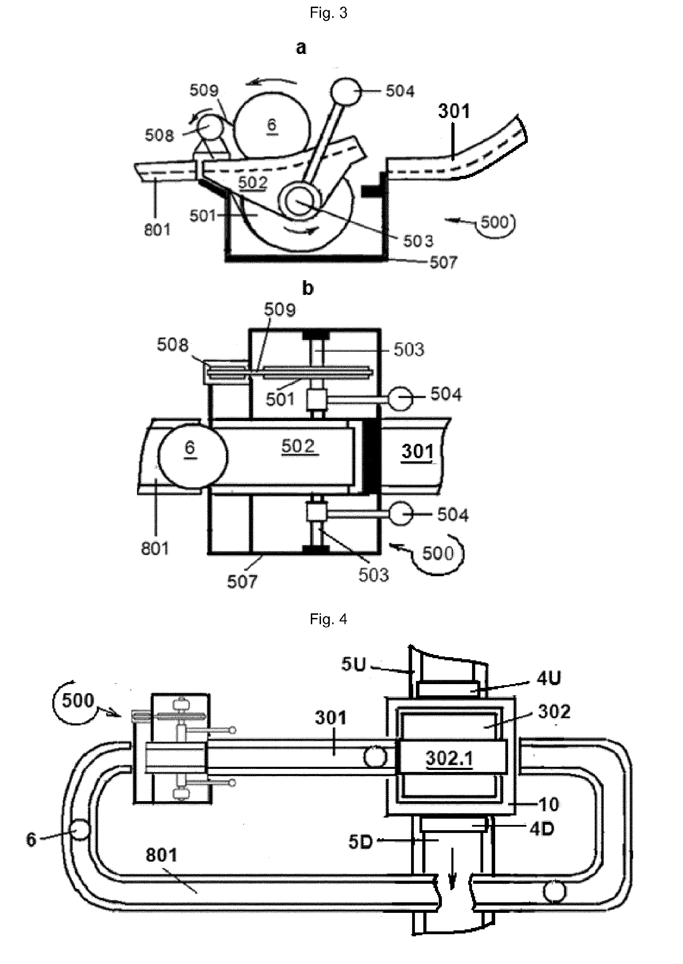

The figures 1 and 4 show an integrated hydropower plant using rigid body dynamics-based hydropower technology. It comprises a vertical rigid energy generating engine 1000 and a rigid energy conversion mechanism 500. The vertical rigid energy generating engine 1000 operates on the basis of Archimedes' upthrust principle. It comprises a chamber 10, a track 801, a fluid-rigid energy transformation and conversion mechanism 300, n rigid spheres 6, a water intake channel 5U, a water outflow channel 5D and two water gates 4U and 4D.

The fluid-rigid energy transformation and conversion mechanism 300 transforms the gravitational potential energy of the contained water in chamber 10 which is required for conducting a production cycle to a rigid sphere 6 then converts the gained gravitational potential energy by the sphere 6 into kinetic energy. It comprises a slide 301 and a float with extension 302 which is located in chamber 10. There is a certain extent of clearance between the float and the chamber to have the float moved up and down smoothly without any interference.

The float with extension 302 is equipped with a lever 302.1which is designed in such a way as to make its right side heavier and to stop its upwards vertical movement from the left side by the track 801. It has in addition a surface that curves inward for accommodating the spheres 6. Its extension is equipped additionally with a member 302.2 for keeping the lever 302.1 in a horizontal position, while floating.

The water gates 4U and 4D control water intake and outlet and are regulated by means of a not depicted mechanism. The force that pushes the float 302 upwards comes from Archimedes force. As is known according to Archimedes' upthrust principle the upward buoyant force exerted on a body immersed in a fluid, whether fully or partially submerged, is equal to the weight of the fluid that the body displaces. The immersed volume of the float 302 must displace an amount of water enough for pushing upwards the lever 302.1 along with the sphere 6.

A production cycle starts with opening the gate 5U and closing the gate 5D. Once chamber 10 is filled with sufficient amount of water for lifting the sphere 6 the bottom of the float 302 would sufficiently submerged under water and the gravitational force would push it upwards, causing, thereby lifting the lever 302.1 together with the sphere 6 to the level of the track 801. As a result of stopping the upwards vertical movement of the lever 302.1 from the left side by the track 801 it would be exposed only from the right side to the upward force by the float 302 causing it to swing counter clockwise about its shaft and the sphere 6 would roll over the top of slide 301. At this moment it has already gained the gravitational potential energy of the contained water in chamber 10. Then it starts rolling downwards. At the bottom of the slide 300 the whole gained potential energy by the sphere 6 would be converted into kinetic energy.

After filling chamber 10 up to the required level with water the gate 4U would be closed and once the sphere 6 reaches the top of the slide 300 the gate 4D would be opened, the water would be discharged and the float with extension 302 would rest on the bottom of chamber 10. This would be the end of the production cycle.

The fluid-rigid energy transformation and conversion mechanism 300 functions according to the principle of conservation of energy in which the input energy is equal to the output energy. The contained water is the force which does the work. After performing a work and discharging the water from chamber 10 the production cycle could simply be repeated by its re-fulfillment.

As indicated earlier the stored kinetic energy in the sphere 6 must be converted into useful mechanical or electrical energy in the second phase of production. According to figures 1, 3a and 3b the rigid energy conversion mechanism 500 consists of a box 507, a driving lever 502, a flywheel 501, a shaft 503, ballast 504, a belt 509 and an electric generator 508. The shaft 503 is mounted on the sides of the box 507. The driving lever 502 and the ballast 504 are fixed to the shaft 503.

Figure 1 shows the rigid energy conversion mechanism 500 before entering a sphere 6. Figure 3a shows how a rolling sphere 6 actuates the driving lever 502 where most of its stored kinetic energy would be extracted. It uses the remaining energy for rolling over the descending track 801 towards the lever 302.1. Once a sphere 6 enters the track 801 the ballast 504 turns the driving lever 502 to its initial position and once it rests on the lever 302.1 a new production cycle starts.

By applying a torque to the flywheel 501 the stored kinetic energy in the sphere 6 would be converted into mechanical rotational energy. The flywheel 501 applies torque to the electric generator 508 by means of the belt 509, converting thereby the mechanical rotational energy into electrical energy.

Due to the negligible energy loss through the rolling of the spheres down the slide and by converting the kinetic energy into electrical energy the efficiency of plants using rigid body dynamics-based hydropower technology is expected to be extremely high for any differences in heights larger than zero. The high efficiency is achieved by using simple low-cost devices functioning on the basis of the laws of rigid body dynamics.

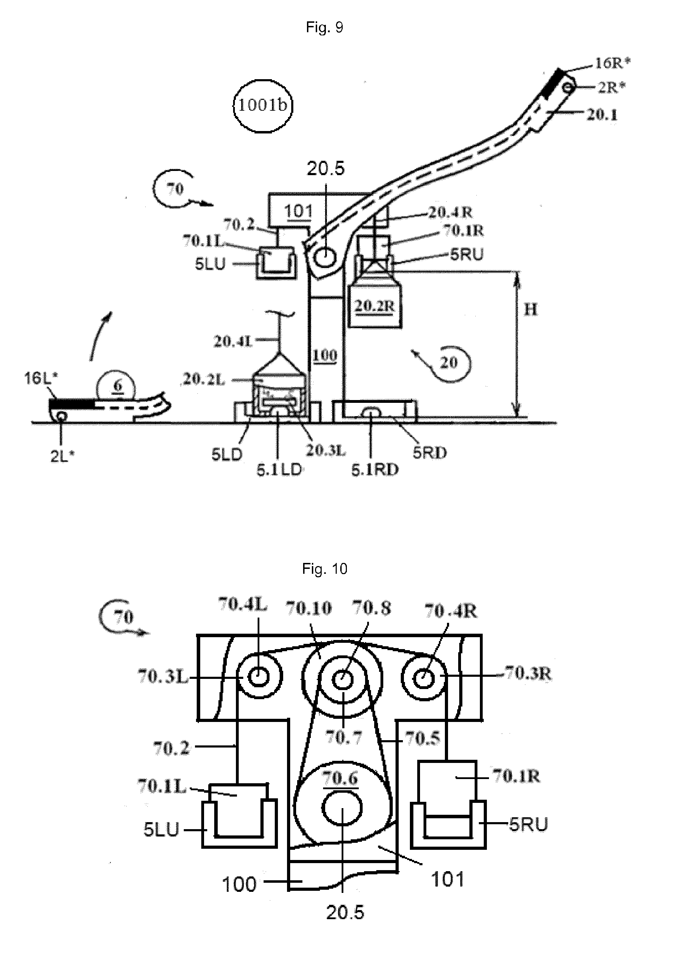

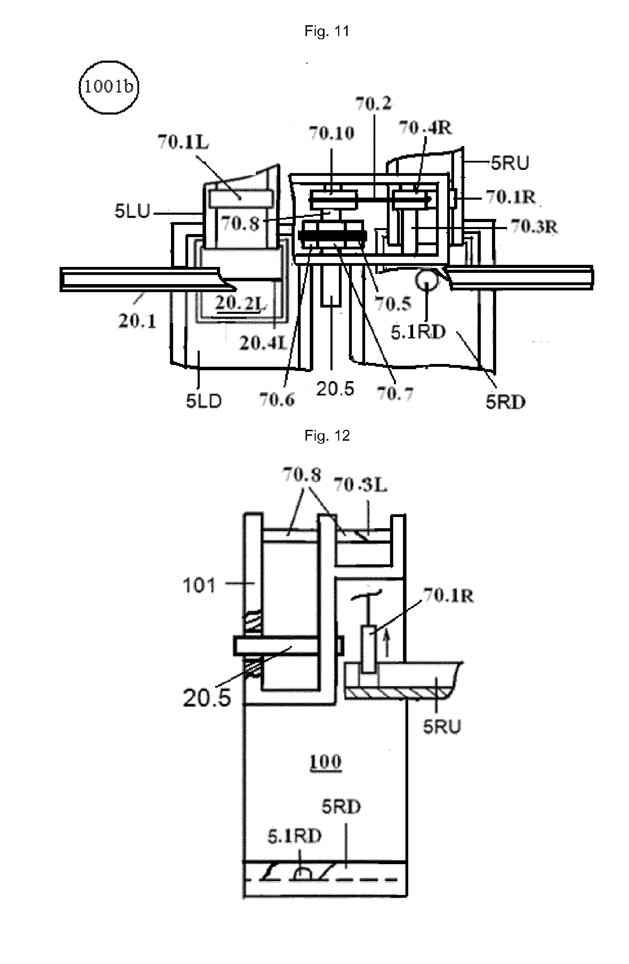

The figures 9-12 show a side-alternating rigid energy generating engine with water containers 1001b comprising a fluid-rigid energy transformation and conversion mechanism 20, a pillar 100, a structure 101, two water intake channels 5LU and 5RU, two water outflow channels 5LD and 5RD, a rigid sphere 6 and a mechanism for regulating water intake 70.

The fluid-rigid energy transformation and conversion mechanism 20 comprises a lever 20.1, a shaft 20.5 and two water containers 20.2L and 20.2R, which are hanging on the lever 20.1 by means of the relevant elements 20.4L and 20.4R. The lever 20.1 is fixed to the shaft 20.5 which is mounted on the structure 101. The latter is fixed to the pillar 100.

The water flows through the water intake channel 5LU or 5RU into the water container 20.2L or 20.2R and flows out the water container 20.2L or 20.2R through the outflow channel 5LD or 5RD after performing a work.

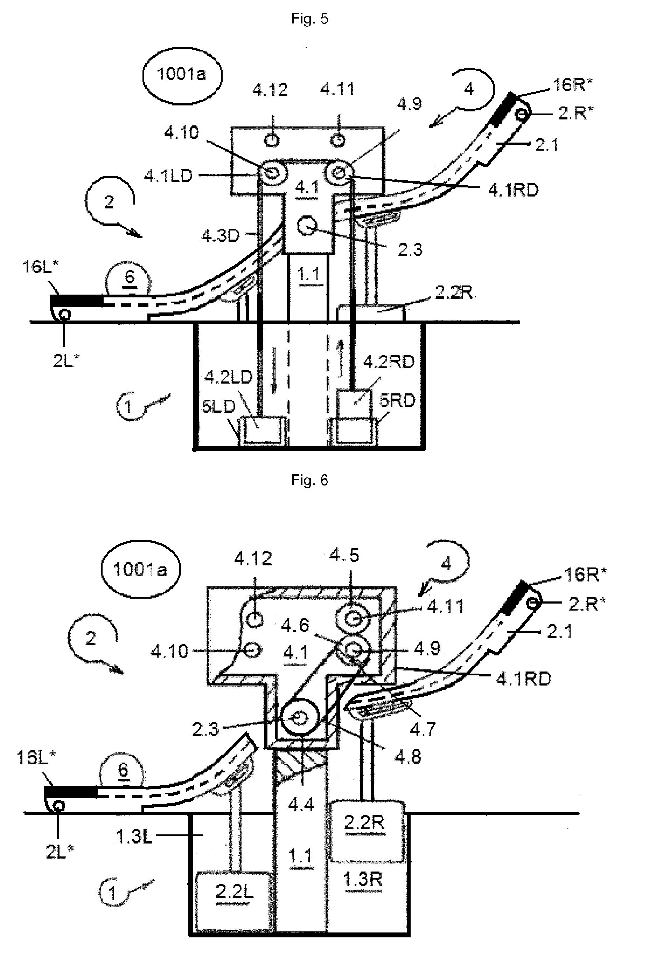

According to Fig. 6 the water intake mechanism 70 is actuated by the movement of the shaft 20.5 and consists of the water gates 70.1 L and 70.1 R, the chain 70.5, the gear wheel 70.6 which is fixed to the shaft 20.5, the gearwheel 70.7 which is fixed to the shaft 70.8, the belt 70.2, the drive pulley 70.10 which is fixed to the shaft 70.8, the driven pulley 70.3L which is mounted on the shaft 70.4 L, the driven pulley 70.3R which is mounted on the shaft 70.4R. The shafts 70.4L and 70.4R are fixed to the structure 101.

The water container 20.2L or 20.2R is equipped with a relevant drainage valve 20.3L or 20.3R. Each drainage valve comprises a lid to plug the opening at the bottom of the container and pressure springs for adding pressure on the lid.

In order to enable the functioning of the drainage valve the outflow channel 5LD is equipped with the rigid object 5.1LD and the outflow channel 5RD with the rigid object 5.1RD. Once the water container 20.2L or 20.2R reaches the bottom its lid 20.2L or 20.2R collides with the rigid object 5.1LD or 5.1.RD causing thereby the outflow of its content water.

When the water container 20.2L reaches the bottom the water gate 70.1 L closes the channel 5LU and the water gate 70.1 R opens the channel 5RU. In this way only one water gate 70.1 L or 70.1 R and only one drainage valve 20.3L or 20.3R opens at the end of a production cycle. After performing a work and discharging the water from the container 20.2L or 20.2R the production cycle could simply be repeated by refulfillment the opposite elevated container 20.2R or 20.2L.

Let us assume that the rigid sphere 6 rests first on the left edge of the lever 20.1. In this position the water container 20.2R will rest at the upper right position under the opened intake channel 5RU. Once the container 20.2R is filled with sufficient amount of water for lifting the sphere 6 the lever 20.1 would swing abruptly in a clockwise direction. As a result the sphere 6 would be lifted and the container 20.2R or 20.2L would reach the bottom. In this position the lifted sphere has gained the gravitational potential energy of the contained water in the container 20.2R or 20.2L while the gravitational potential energy of the latter would be equal zero.

The fluid-rigid energy transformation and conversion mechanism 20 enables the conversion of the gained gravitational potential energy into kinetic energy as well. The back of the lever 20.1 functions as a means for lifting the rigid sphere 6 and a track for its rolling from the lifted side to the lowered side. The lifted rigid sphere 6 starts immediately to roll down on the back of the lever 20.1 and after rolling downwards to the level from which it was lifted the whole gained gravitational potential energy would be converted into kinetic energy. In the same way it could be shown that the next production cycle could start when the sphere 6 rests on the right edge of the lever 20.1.

The generated kinetic energy in the first phase of production has to be converted into useful mechanical or electrical energy in the second phase. In order to enable carrying out the second phase of production the lever 20.1 is equipped from the right site with the two parallel steel rails 16R* and a rod 2R* and from the left side with the two parallel steel rails 16L* and a rod 2L*.

The fingers 5-8 show a side-alternating rigid energy generating engine 1001a operating on the basis of Archimedes' upthrust principle. It comprises a structure 1, a fluid-rigid energy transformation and conversion mechanism 2, a rigid sphere 6, two water intake channels 5LU and 5RU, two water outflow channels 5LD and 5RD and a mechanism for regulating water intake and outflow 4.

The structure 1 comprises two chambers 1.3L and 1.3R and a supporting wall 1.1. The fluid-rigid energy transformation and conversion mechanism 2 comprises a lever 2.1, a shaft 2.3 and two floats with extension 2.2L and 2.2R. The float 2.2L is located in chamber 1.3L and the float 2.2R in chamber 1.3R. The lever 2.1 is mounted on the shaft 2.3 and rests from the left side on the extension of the float 2.2L and from the right side on the extension of the float 2.2R.

The mechanism for regulating water intake and outflow 4 is driven by the shaft 2.3 and regulates water movement into and out of the chambers 1.3L and 1.3R. It consists of the water gates 4.2LU, 4.2RU, 4.2LD and 4.2RD, the drive pulleys 4.1 RD and 4.1 RU, the driven pulleys 4.1 LU and 4.1LD, the belts 4.3U and 4.3D and the gear box 4.1. The latter comprises the gears 4.4, 4.5, 4.6 and 4.7, the chain 4.8, the shafts 4.9, 4.10, 4.11 and 4.12.

The water gates 4.2LU and 4.2RU regulate water intake into the relevant chambers 1.3L and 1.3R. The water gates 4.2LD and 4.2RD regulate water discharge from these chambers.

Let us assume that the sphere 6 rests on the left side of the lever. When water flows into chamber 1.3L, for instance, it flows simultaneously out of chamber 1.3R. As a result of accumulation of water in the chamber 1.3R and discharging the water out of chamber 1.3R the float 2.2L starts exerting buoyant force on the left side of the lever 2.1 where the sphere 6 is resting in accordance with Archimedes' upthrust principle. When the bottom of the float 2.2L or 2.2R is sufficiently submerged under water the gravitational force would push the float 2.2L or 2.2R upwards, causing, thereby lifting the left or the right side of the lever 2.1 together with the sphere 6. In this way the lever 2.1 would be exposed only from one side to the upward force by the float 2.2L or 2.2R causing it to swing abruptly about its shaft 2.3 in a clockwise direction.

As in the case of using a side-alternating rigid energy generating engine with water containers, the back of the lever 2.1 functions as a means for lifting the rigid sphere 6 and a track for its rolling from the lifted side to the lowered side. The lever 2.1 is also equipped from the right side with two parallel steel rails 16R* and a rod 2R* and from the left side with two parallel steel rails 16L* and a rod 2L*.

Let us assume that the rigid sphere 6 rests first on the left side of the lever 2.1, then the counter clockwise movement of the lever 2.1 which brought it into this position causes water gates 4.2LD and 4.2RU to close and water gates 4.2LU and 4.2RD to open. As a result the water starts to flow into chamber 1.3L and out of chamber 1.3R. Because of the weight of the sphere 6, the float 2.2L would remain at the bottom until enough water has flown into the chamber 1.3L so as to enable it to immerse in water and release, thereby, the required buoyant force for lifting the left side of the lever 2.1 with the sphere 6.

Once the left side of the lever 2.1 is lifted above the right side the gravitational potential energy of the contained water has already transferred to the sphere 6 which starts to roll immediately downwards along the track on the back of the lever 2.1 and when it reaches the level from which it was lifted the whole gained gravitational potential energy in the sphere 6 has already converted into kinematic energy.

As indicated earlier the stored kinetic energy in the sphere 6 must be converted into useful mechanical or electrical energy in the second phase of production. In the case of using a side-alternating rigid energy generating engine 1001 a or 1001 b in the first phase the stored kinetic energy in the rigid sphere 6 must be extracted and converted into useful mechanical or electrical energy in the second phase from both sides.

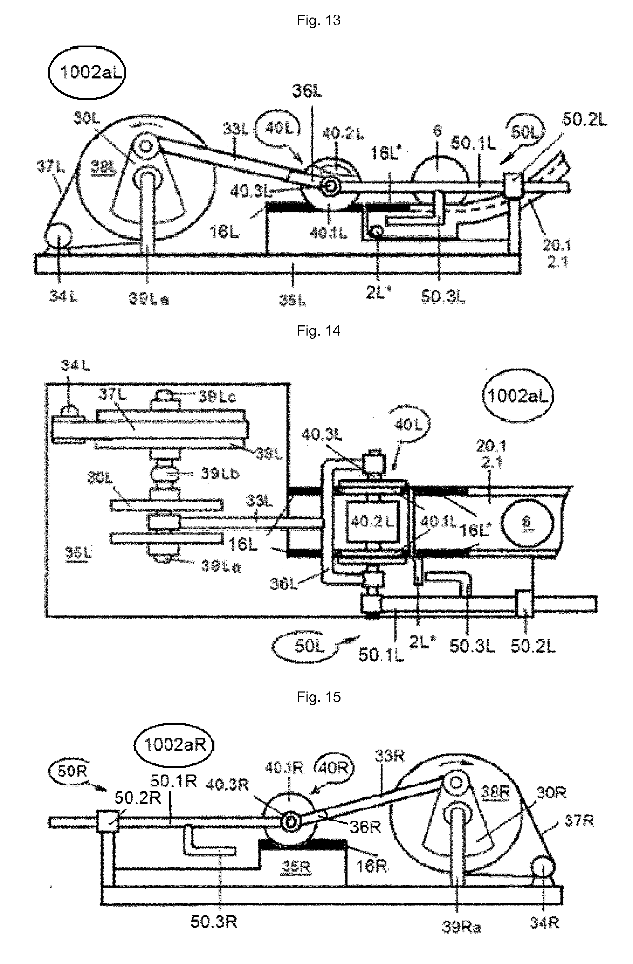

According to figures 13 and 14 the left side rigid energy conversion mechanism 1002aL which is connected to a side-alternating rigid energy generating engine 1001 a or 1001b consists of a structure 35L, two parallel steel rails 16L, a rolling device 40L, a grip 36L, a connecting rod 33L, a crankshaft 30L, a flywheel 38L, a belt 37L, an electric generator 34L and a linear motion mechanism 50L.

The crankshaft 30L is supported by means of the Load-bearing structures 39aL and 39bL and the shaft of the flywheel 38L is fixed to the Load-bearing structures 39bL and 39cL. The rolling device 40L consists of two wheels 40.1 L which are mounted on the shaft 40.3 and roll over the two parallel steel rails 16L and a rigid cylinder 40.2L which is mounted on the shaft 40.3L. The connecting rod 33L is fixed to the grip 36L which is also mounted on the shaft 40.3L. The linear motion mechanism 50L comprises a shaft 50.1 L which is mounted on the shaft 40.3L from one side and slides through the cylinder 50.2L which is fixed to the structure 35L from the other side.

When the left side of the lever 20.1 of the side-alternating energy generating engine 1001b or the lever 2.1 of the side-alternating energy generating engine 1001 a touches the structure 35L of the left side rigid energy conversion mechanism 1002aL the rigid sphere 6 rolls and hits the rigid cylinder 40.2L and pushes the rolling device 40L over the two parallel steel rails 16L along with the connecting rod 33L leftwards. At this time the rolling sphere 6 leaves the lever 20.1 or 2.1 and rolls over the structure 35L. In order to prevent the left side of the relevant lever 2.1 or 20.1 from getting lifted in the absence of the sphere 6 the element 50.3L which is fixed to the shaft 50.1 was introduced. When the sphere 6 pushes the rolling device 40L leftwards the element 50.3L moves over the rod 2L*. In this way it prevents the left side of the lever 20.1 or 2.1 from getting lifted.

Pushing the rigid cylinder 40.2L leftwards by means of the sphere 6 results in turning the crankshaft 30L along with the flywheel 38L. After completing a 180° turning the crankshaft 30L starts pushing the connecting rod 33L along with the rolling device 40R rightwards. The latter pushes the sphere 6 back into the left side of the lever 2.1 or 20.1 and rolls over the two parallel steel rails 16L* then draws back and rests in its initial position on the rails 16L.

The filling of the relevant water container 20.2L or 20.2R or the relevant chamber 1.3L or 1.3R with water must end after the sphere 6 has rolled back on the lever 2.1 or 20.1.

The flywheel 38L releases stored energy by applying torque to the electric generator 34L by means of the belt 37L. The generator 34L converts the supplied mechanical rotational energy into electrical energy.

Figure 15 shows a schematic side view of the right side rigid energy conversion mechanism which is connected to a side-alternating rigid energy generating engine. Although the generation of electrical energy is the main goal, useful mechanical energy could also be put into more direct use. A hydropower plant based on the current invention could be designed for operating a hummer, cutting wood, pumping water and grinding grains.

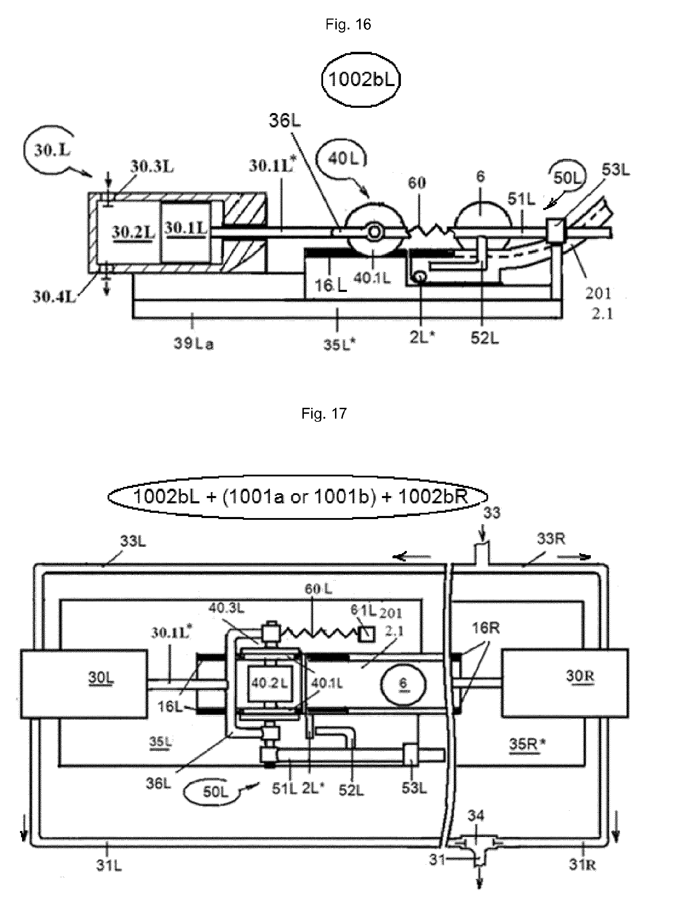

Figure 16 shows a schematic side view of the left side rigid energy conversion mechanism for operating a water pump in the second phase of production. Figure 17 shows a top view of an integrated water pumping plant consisting of a side-alternating rigid energy generating engine 1001 a or 1001b and two rigid energy conversion mechanisms 1002bL and 1002bR for converting the kinetic energy stored in the rigid sphere 6 into useful mechanical energy for operating a water pump.

According to the figures 16 and 17 the left side rigid energy conversion mechanism for converting the stored kinetic energy in the rigid sphere 6 into useful energy for operating a water pump comprises a structure 35L*, two parallel steel rails 16L, a rolling device 40L, a grip 36L, a rod 30.1L* and a piston pump 30L. The piston pump 30L is made up of a piston 30.1 L, a body with a chamber 30.2L, a suction valve 30.3L and a discharge valve 30.4L. The rod 30.1L* is fixed directly from one side to the grip 36L and from the other to the piston 30.1 L.

Both pumps 30L and 30R utilize suction to draw in water for compression from the water supplying source by means of the relevant pipe 33L or 33R via the pipe 33. After the left or right side of the lever 20.1 or 2.1 touches the structure 35L* or 35R* the rigid sphere 6 pushes the rolling device 40L or 40R over the two parallel steel rails 16L or 16R along with the connecting rod 30.1L* or 30.1L*. The piston 30.1 L or 30.1 R compresses the water in the chamber 30.2L or 30.2R under the pressure and sent the compressed water through the open discharge valve 30.4L or 30.4R via the penstock pipe 31 L or 31 R. The two pipes are joined together by means of the three-way pipe joint 40. The latter ensures that the pressurized water flow further through the penstock pipe 31 to the end user.

In order to enable drawing back the pistons 30.1 L and 30.1 R the tension springs 60L and 60R were introduced. The tension spring 60L or 60R is fixed from one side to the grip 36L or 36R and from the other to the fixative 61 L or 61 R which is fixed to the relevant structure 35L* or 35R*.

When the piston 30.1 L or 30.1 R draws back it opens the suction valve 30.3L or 30.3R and closes the discharge valve 30.4L or 30.4R, thereby utilizing suction to draw in additional water for compression. At the same time it pushes the rigid sphere 6 towards the left or right edge of the relevant lever 2.1 or 20.1 so as to enable a new cycle.

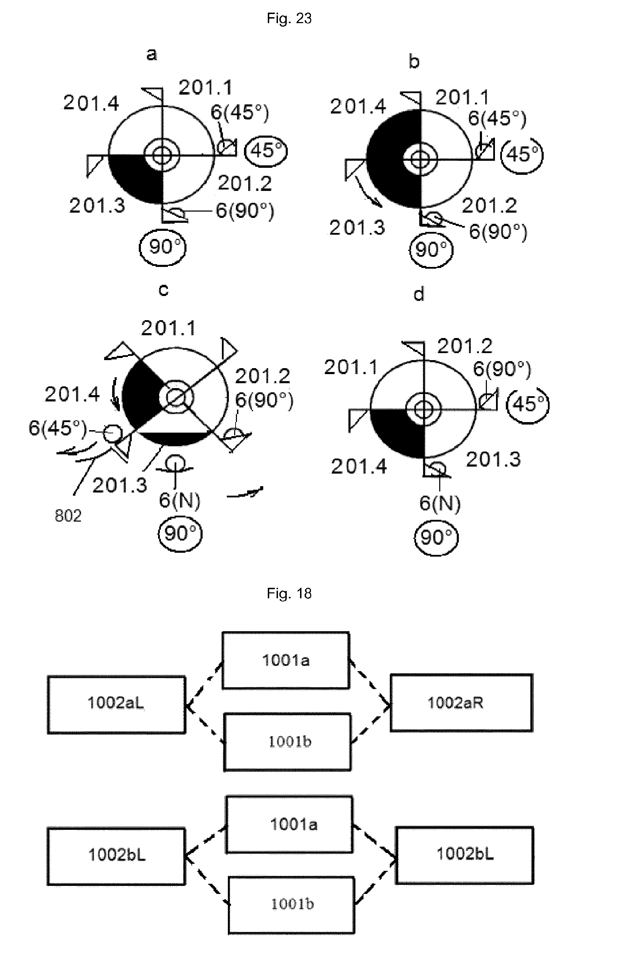

Figure 18 shows alternative combinations of a side-alternating rigid energy generating engine 1001 a or 1001 b with rigid energy conversion mechanisms 1002aL and 1002aR or 1002bL and 1002bR.

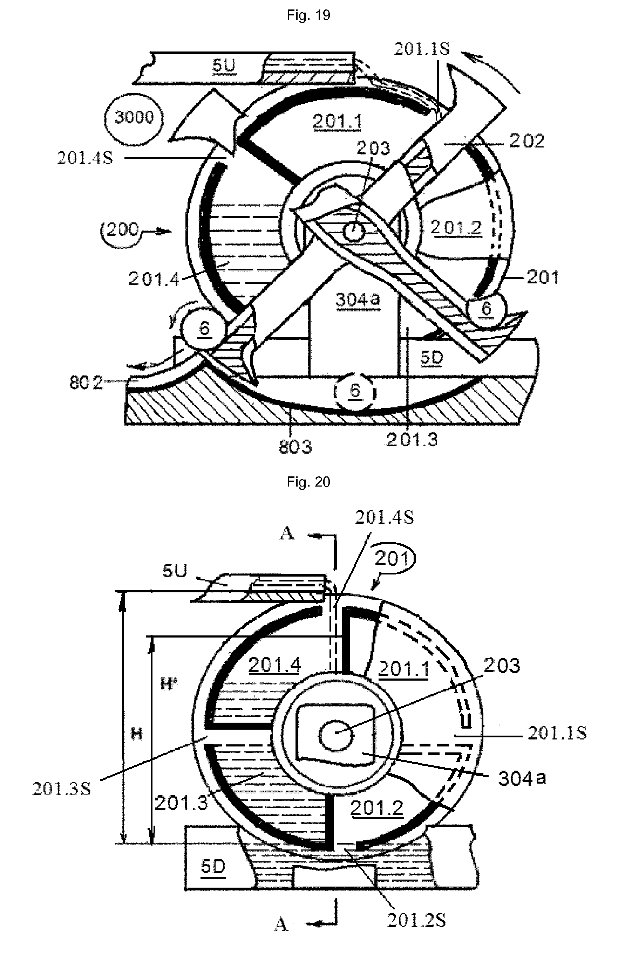

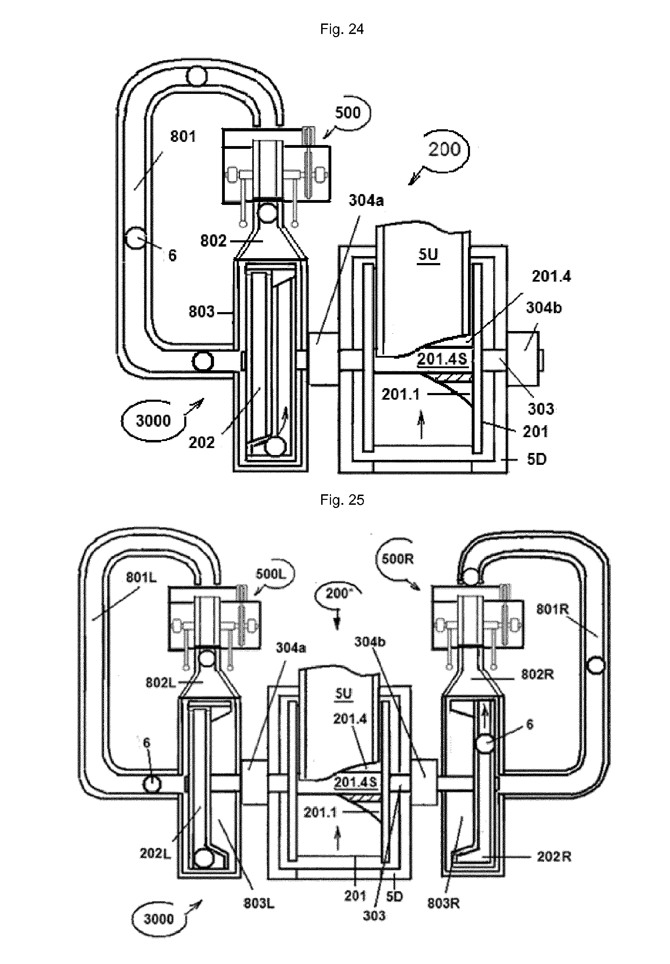

Figure 24 shows a top view of an integrated hydropower plant using rigid body dynamics-based hydropower technology comprising a revolving rigid energy generating engine with water containers 3000 and a rigid energy conversion mechanism 500. Figure 19 shows a schematic front view of a revolving rigid energy generating engine 3000. It comprises a fluid-rigid energy transformation and conversion mechanism 200, two Load-bearing structures 304a and 304b, n rigid spheres 6, a water intake channel 5U and a water outlet channel 5D, a track 801, a guiding track 802 and a terminal 803.

The fluid-rigid energy transformation and conversion mechanism 200 comprises a drum 201, two crossed levers 202 and a shaft 303. According to figures 19, 20 and 21 the drum 201 and the two crossed levers 202 are fixed to the shaft 303 which is mounted on the two Load-bearing structures 304a and 304b. The drum 201 comprises four equal water containers 201.1, 201.2, 201.3 and 201.4. The two crossed levers 202 have four tracks for rolling of the spheres 6. Each track is bent from one side so as to enable lifting the spheres 6.

The water flows from the water intake channel 5U into the containers 201.1, 201.2, 201.3 and 201.4 through their relevant slots 201.1S, 201.2S, 201.3S and 201.4S. The water flows out of the containers also through these slots into the outlet channel 5D.

According to figure 20 the maximum admissible volume of water in the container 201.3 is decided by the location of the slot 201.3S. The container 201.4 must therefore be filled with water up to the height H*. This is the maximal volume of water which could be maintained in the container 201.4 after a 45° counter clockwise rotation of the drum 201.

According to figure 23 (a) the lower left container 201.3 is already filled with water during the previous cycle up to the allowed height H*. This amount of water is not sufficient for forcing a counter clockwise rotation of the drum 201 together with the two crossed levers 202 which are blocked by the sphere 6 (90°) which is located in the 90° position and opposed by the counterweight of sphere 6 (45°) which is located in the 45° position.

According to figure 23 (b) a new production cycle starts with filling of the empty upper left container 201.4. Once the upper left container 201.4 is being filled up to the allowed volume H* the drum 201 makes a sudden 45° counter clockwise rotation together with the two crossed levers 202. During this rotation the sphere 6 (45°) which was located in the 45° position would be lifted higher and starts rolling downwards on the relevant track of the two crossed levers 202. At the same time the container 201.3 starts discharging its water containment.

The gravitational potential energy of the discharged amount of water from the container 201.3 was already transferred to the rolling sphere 6 (45°). When the latter enters the guiding track 802 and rolls towards the rigid energy conversion mechanism 500 its stored gravitational potential energy has already converted into kinetic energy [See figures19 and 23(c)].

According to figure 23 (d) the two crossed levers 202 were brought to a halt by the new sphere 6 (N) which is located in the 90° position and the counter Wight of the sphere 6 (90°) which is now located in the 45° position. A new cycle starts with the filling of the container 201.1 up to the allowed height H*.

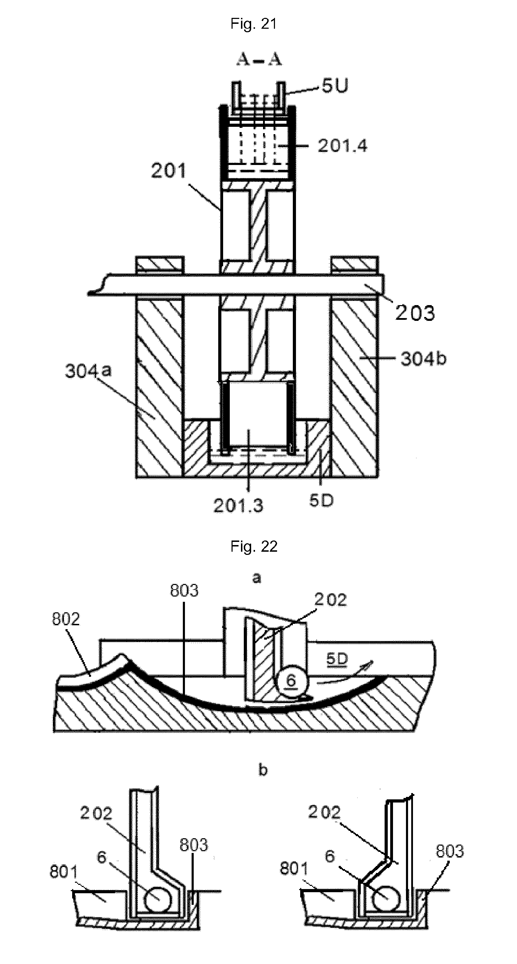

The track 801, the guiding track 802 and the terminal 803 provide for the continuity of the process of energy generation. The terminal 803 is designed in such a way as to facilitate lifting the entering spheres 6 as shown in figures 22a and 22b.

The rigid energy conversion mechanism 500, the fluid - rigid energy transformation and conversion mechanism 200 and the track 801 could be designed in such a way as to ensure a perfect timing for rotating the drum 201 and entering the spheres 6 into the terminal 803. The timing of entering the spheres into the terminal 803 could also be regulated by means of a not depicted electronically actuated mechanism. According to figure 25 a revolving rigid energy generating engine with water containers 3000 and two rigid energy conversion mechanisms 500L and 500R. The fluid-rigid energy transformation and conversion mechanism 200* comprises a drum 201, two separate levers 202L and 202R and a shaft 303. The plant comprises in addition the tracks 801L and 801R; two guiding tracks 802L, 802R and two terminals 803L and 803R.

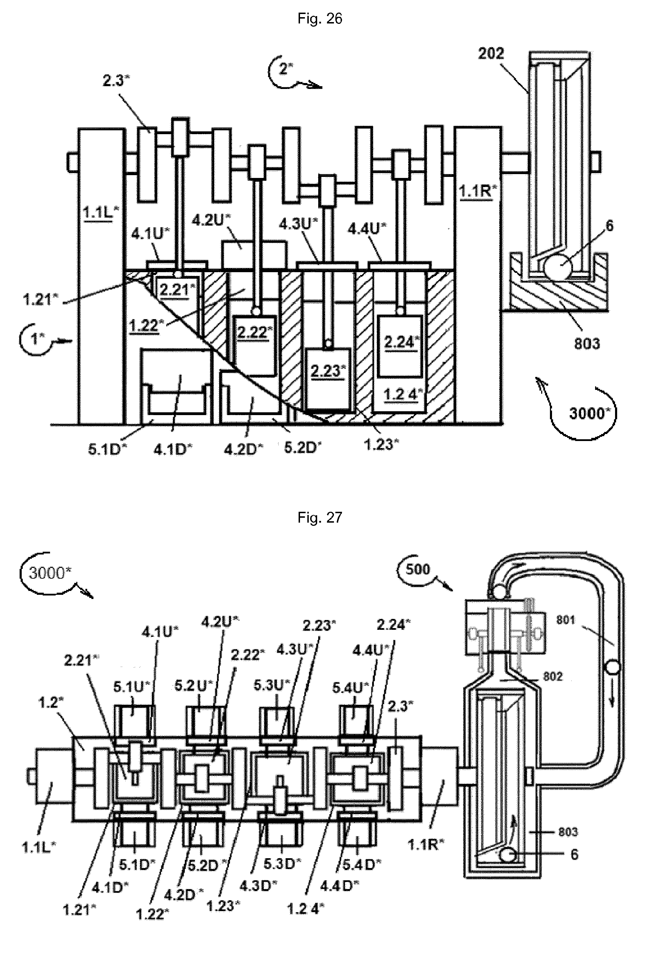

The figures 26 and 27 show an integrated hydropower plant using rigid body dynamics-based hydropower technology comprising a revolving rigid energy generating engine operating on the basis of Archimedes' upthrust principle 3000* and a rigid energy conversion mechanism 500. The revolving rigid energy generating engine 3000* comprises a fluid-rigid energy transformation and conversion mechanism 2*, a structure 1*, n rigid spheres 6, a track 801, a guiding track 802 and a terminal 803, four water intake channels 51U*, 52U*, 5.3U* and 5.4U* and four water outflow channels 5.1D*, 5.2D*, 5.3D* and 4.5D*, four water gates for controlling water intake 4.1U*, 4.2U*, 4.3U* and 4.4U* and four water gates for controlling water outflow 4.1D*, 4.2D*, 4.3D* and 4.4D* (The water intake and outflow gates are regulated by means of a not depicted mechanism).

The structure 1* comprises two Load-bearing pillars 1.1L* and 1.1R* and four chambers 1.21*, 122*, 123* and 124*. The fluid-rigid energy transformation and conversion mechanism 2* comprises two crossed levers 202, a crankshaft 2.3* and four floats with rods 2.21* 2.22* 2.23* and 2.24* which are located in the relevant chambers 1.21*, 122*, 123* and 124*. The crankshaft 2.3* is mounted on the Load-bearing structures 1.1L* and 1.1R* and the two crossed levers 202 are fixed to the crank nose of the crankshaft 2.3*.

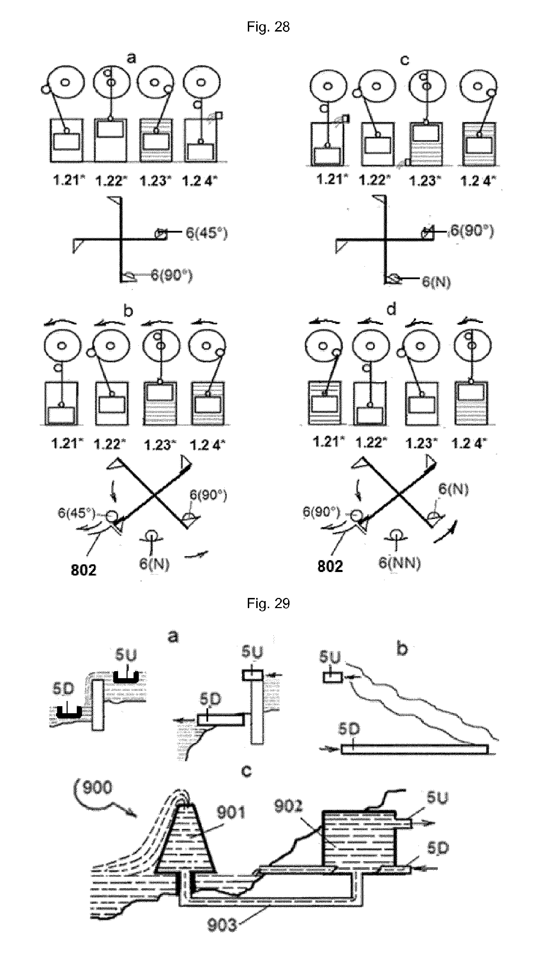

The working principle of the revolving rigid energy generating engine 3000* is shown in figure 28. According to figure 28(a) the chamber 1.23* is already filled with water during the previous cycle up to the required level. This amount of water is not sufficient for forcing a counter clockwise rotation of the crankshaft 2.3* together with the two crossed levers 202 which are blocked by the sphere 6 (90°) which is located in the 90° position and opposed by the counterweight of sphere 6 (45°) which is located in the 45° position.

According to figures 28(a) and 28(b) a new production cycle starts with filling of chamber 1.24*. Once the latter is filled with water up to the required level the crankshaft 2.3* would makes a sudden 45° counter clockwise rotation together with the two crossed levers 202. During this rotation the sphere 6 (45°) which was located in the 45° position would be lifted higher and starts rolling downwards on the relevant track of the two crossed levers 202. At the same time water starts discharging from chamber 1.23*, indicating, thereby, the transfer of its gravitational potential energy to the rolling sphere 6 (45°). When the latter enters the guiding track 802 and rolls towards the rigid energy conversion mechanism 500 its stored gravitational potential energy has already converted into kinetic energy.

According to figures 28(c) and 28(d) the two crossed levers 202 which were brought to a halt by the new sphere 6 (N) and the counter weight of the sphere 6 (90°) which is now located in the 45° position would be overcome during the next cycle after filling chamber 1.21* with water up to the required level.

On the basis of rigid body dynamics - based hydropower technology it is possible to construct large plants for generating electricity in the case of availability low-head renewable water resources with relatively high volumetric flow rate. In order to avoid exceeding the physical limits of the equipment in such cases, the plant could be divided into smaller blocks. For instance instead of using spheres of 30 tons in a single plant three neighboring production blocks each capable of lifting spheres of 10 tons could be built.

The principle of integrating a number of blocks into one plant is also useful in the case of harnessing water resources with large heads and relatively law volumetric flow rate. The water outlet of the highest block would be used as a water intake for the second and the water outflow of the second would be used as water intake for the third and so on.

The following rule can be generalized in connection with the mechanical efficiency and economic feasibility in the case of using rigid body dynamics-based hydropower technology: "the same power can be extracted from water sources theoretically containing the same power but having different hydraulic heads."

Figure 29 shows different variants for water intake and water outflow of rigid energy generating engines.
1 - Taking the water from the high side of a dammed river by means of the intake channel 5U and discharging it into the lower side by means of the outflow channel 5D as shown in figure 29a.
2 - Taking the water from upstream of a steep stream or river by means of the intake channel 5U and discharging it into downstream by means of the outflow channel 5D as shown in figure 29b. In this way a dam could be avoided.
3 - In the case of harnessing tidal energy a special construction 900 would be required. According to figure 29c the construction 900 consists of an overtopping device 901, a reservoir 902 and a connecting pipe 903. The overtopping device 901 captures sea water of incident waves. The captured water flows through the connecting pipe 903 into the reservoir 902 which is located on the shore. After filling the reservoir 902 the water would be supplied through the intake channel 5U and released back to the sea by means of the outflow channel 5D.

## Claims

1. A rigid body dynamics-based hydropower technology capable of generating useful mechanical or electrical energy from gravitational potential energy of renewable water resources in a production cycle consisting of two phases and involving the following stages of production: a) containing the required amount of water for performing a production cycle at the level of the upstream water table or of water intake; b) transferring the gravitational potential energy of the contained water to a rigid body in the form of a rigid sphere; c) converting the gained gravitational potential energy by the rigid sphere into kinetic energy; d) converting the stored kinetic energy in the rigid sphere into useful mechanical or electrical energy, *wherein,* the first phase of production involves the stages (a-c) and carried out by means of a rigid energy generating engine, whereas the second phase involves the stage (d) and carried out by means of a rigid energy conversion mechanism.

2. A hydropower plant using rigid body dynamics-based hydropower technology according to claim 1, having a vertical rigid energy generating engine 1000 operating on the basis of Archimedes' upthrust principle for carrying out the first phase of production and a rigid energy conversion mechanism 500 for carrying out the second phase of production, the vertical rigid energy generating engine 1000 comprises a chamber 10, a track 801, a fluid-rigid energy transformation and conversion mechanism 300, n rigid spheres 6, a water intake channel 5U, a water outflow channel 5D, a water gate for controlling water intake 4U and a water gate for controlling water outflow 4D; *wherein* the fluid-rigid energy transformation and conversion mechanism 300 comprises a slide 301 and a float with extension 302 which is located in chamber 10 and equipped with a lever 302.1 and a member 302.2; whereas the rigid energy conversion mechanism 500 comprises a box 507, a driving lever 502, a flywheel 501, a shaft 503, ballasts 504, a belt 509 and an electric generator 508.

3. A hydropower plant using rigid body dynamics-based hydropower technology according to claims 1 and 2, having a revolving rigid energy generating engine with water containers 3000 for carrying out the first phase of production and a rigid energy conversion mechanism 500 for carrying out the second phase of production, the revolving rigid energy generating engine 3000 comprises a fluid-rigid energy transformation and conversion mechanism 200, two Load-bearing structures 304a and 304b, n rigid spheres 6, a water intake channel 5U, a water outlet channel 5D, a track 801, a guiding track 802 and a terminal 803; *wherein* the fluid-rigid energy transformation and conversion mechanism 200 comprises a drum 201, two crossed levers 202 and a shaft 203 which is mounted on the Load-bearing structures 304a and 304b, the drum 201 is fixed to the shaft 203 and comprises four water containers 201.1, 201.2, 201.3 and 201.4; and four slots for water intake and outflow 201.1S, 201.2S, 201.3S and 201.4S, the two crossed levers 202 are fixed to the shaft 203 and having together four tracks for rolling of the rigid spheres 6 from the lifted side to the lowered side.

4. A hydropower plant using rigid body dynamics-based hydropower technology according to claims 1, 2 and 3, having a revolving rigid energy generating engine 3000* operating on the basis of Archimedes' upthrust principle for carrying out the first phase of production and a rigid energy conversion mechanism 500 for carrying out the second phase of production, the revolving rigid energy generating engine 3000* comprises a fluid-rigid energy transformation and conversion mechanism 2*, a structure 1*, n rigid spheres 6, a track 801, a guiding track 802 and a terminal 803, four water intake channels 51U*, 52U*, 5.3U* and 5.4U*, four water outflow channels 5.1D*, 5.2D*, 5.3D* and 4.5D*, four water gates for controlling water intake 4.1U*, 4.2U*, 4.3U* and 4.4U* and four water gates for controlling water outflow 4.1D*, 4.2D*, 4.3D* and 4.4D*; *wherein* the structure 1* comprises two Load-bearing pillars 1.1L* and 1.1R* and four chambers: 1.21*, 122*, 123* and 124*, the fluid-rigid energy transformation and conversion mechanism 2* comprises two crossed levers 202, a crankshaft 2.3* and the floats with rods 2.21* 2.22* 2.23* and 2.24* which are located in the relevant chambers 1.21*, 122*, 123* and 124*, the crankshaft 2.3* is mounted on the Load-bearing pillars 1.1L* and 1.1R* and the two crossed levers 202 are fixed to its crank nose.

5. A hydropower plant using rigid body dynamics-based hydropower technology according to claims 1 and 2, having a side-alternating rigid energy generating engine 1001 a operating on the basis of Archimedes' upthrust principle for carrying out the first phase of production and two Identical left and right rigid energy conversion mechanisms 1002aL and 1002aR for carrying out the second phase of production, the side-alternating rigid energy generating engine 1001 a comprises a rigid sphere 6, a structure 1 comprising two chambers 1.3L and 1.3R and a supporting wall 1.1, a mechanism for regulating water intake and outflow 4 and a fluid-rigid energy transformation and conversion mechanism 2 comprising a lever 2.1, a shaft 2.3 and two floats with extension 2.2L and 2.2R, *wherein,* the lever 2.1 is equipped with two parallel steel rails 16L* and 16R* and two rods 2L* and 2R* and mounted on the shaft 2.3, the floats with extension 2.2R and 2.2L are located in the relevant chambers 1.3R and 1.3L in such away as to enable actuating the lever 2.1 which rests from the left side on the float 2.2L and from the right side on the float 2.2R, the mechanism for regulating water intake and outflow 4 comprises the water gates 4.2LU, 4.2RU, 4.2LD and 4.2RD, the drive pulleys 4.1 RD and 4.1 RU, the driven pulleys 4.1 LU and 4.1 LD, the belts 4.3U and 4.3D and the gear box 4.1; the identical left or right rigid energy conversion mechanism 1002aL or 1002aR comprises a structure 35L or 35R, two parallel steel rails 16L or 16R, a rolling device 40L or 40R comprising two wheels 40.1 L or 40.1 R and a rigid cylinder 40.2L or 40.2R which is mounted on the shaft 40.3L or 40.3R, a connecting rod 33L or 33R fixed to the grip 36L or 36R which is mounted on the shaft 40.3L or 40.3R, a crankshaft 30L or 30R, a flywheel 38L or 38R, a belt 37L or 37R, an electric generator 34L or 34R and a linear motion mechanism 50L or 50R comprising a shaft 50.1 L or 50.1 R which is equipped with the element 50.3L or 50.3R and fixed to the shaft 40.3L or 40.3R from one side and slides freely through the cylinder 50.2L or 50.4R which is fixed to the structure 35L or 35R.

6. A hydropower plant using rigid body dynamics-based hydropower technology according to claims 1 and 5, having a side-alternating rigid energy generating engine with water containers 1001b for carrying out the first phase of production and two Identical left and right rigid energy conversion mechanisms 1002aL and 1002aR for carrying out the second phase of production, the side-alternating rigid energy generating engine 1001b comprises two water intake channels 5RU and 5LU, two water outflow channels 5RD and 5LD, a mechanism for regulating water intake 70, a pillar 100, a structure 101, a rigid sphere 6 and a fluid-rigid energy transformation and conversion mechanism 20 comprising a lever 20.1, a shaft 20.5 and two water containers 20.2L and 20.2R hanging on the lever 20.1 *wherein* the lever 20.1 is fixed to the shaft 20.5 which is mounted on the structure 101 and equipped with two parallel steel rails 16L* and 16R* and two rods 2L* and 2R*, each water container 20.2L and 20.2R is equipped with a relevant drainage valve 20.3L and 20.3R, the outflow channel 5LD is equipped with a rigid object 5.1LD and the outflow channel 5RD with a rigid object 5.1RD, the mechanism for regulating water intake 70 comprises the water gates 70.1 L and 70.1 R, the chain 70.5, the gear wheels 70.6s and 70.7, the belt 70.2, the drive pulley 70.10, the driven pulleys 70.3L and 70.3R.

7. A hydropower plant operating as a water pump using rigid body dynamics-based hydropower technology according to claims 1,5 or 6, having a side-alternating rigid energy generating engine 1001 a or 1001b for carrying out the first phase of production and two joined Identical left and right rigid energy conversion mechanisms 1002bL and 1002bR for carrying out the second phase of production, the left or right rigid energy conversion mechanism 1002bL or 1002bR comprises a structure 35L* or 35R*, two parallel steel rails 16L or 16R, a rolling device 40L or 40R, a grip 36L or 36R, a rod 30.1L* or 30.1*, a piston pump 30L or 30R and a tension spring 60L or 60R which is fixed from one side to the grip 36L or 36R and from the other to the fixative 61 L or 61 R which is fixed to the relevant structure 35L* or 35R*, *wherein* the piston pump 30L or 30R is made up of a piston 30.1 L or 30.1 R, a body with a chamber 30.2L or 30.2R, a suction valve 30.3L or 30.3R for drawing in water for compression by means of the pipe 33L or 33R via the pipe 33, a discharge valve 30.4L or 30.4R for sending the compressed water to the final user via the penstock pipe 31 L or 31 R which are joined together into the penstock pipe 31 by means of the three-way pipe joint 40, whereas the rod 30.1L* or 30.1R* is fixed directly from one side to the grip 36L or 36R and from the other to the piston 30.1 L or 30.1 R.
